# FASCICULE DE BREVET EUROPEEN

(11) **EP 0 499 201 B1**
(45) Date de publication et mention de la délivrance du brevet: **29.11.1995**
(21) Numéro de dépôt: 92102251.3
(22) Date de dépôt: 11.02.1992
(51) Int. Cl.: B65H 75/14, B65H 75/18

(54) **Bobine de conditionnement de conducteur**
Leiterverpackungsspule
Packaging reel for conductor

(30) Priorité: 14.02.1991 FR 9101742
(43) Date de publication de la demande: 19.08.1992
(73) Titulaire: NESTOR BASQUIN SA, F-59541 Caudry Cédéx (FR)
(72) Inventeur: Floury, Yves, F-78750 Mareil-Marly (FR); Lebouc, Luc, F-78500 Sartrouville (FR); Deschamps, Guy, F-59540 Caudry (FR)
(74) Mandataire: Weinmiller, Jürgen

(56) Documents cités:
- FR-A- 2 231 136
- US-A- 3 584 819
- US-A- 4 387 863
- US-A- 4 657 203
- US-A- 4 696 438

## Description

La présente invention se rapporte aux bobines utilisées pour le conditionnement de conducteur de grande longueur, notamment des conducteurs électriques et plus particulièrement des fibres optiques.

Les bobines de conditionnement de conducteurs électriques ou optiques sont déjà largement utilisées pour le stockage et la livraison de longueur importante de conducteurs. Elles comportent un tambour ou fût à deux joues latérales qui retiennent entre elles le conducteur enroulé sur le tambour.

Les documents FR-A-2 231 136, US-A-4 657 203 et US-A-3 584 819 notamment décrivent de telles bobines.

Selon le document FR-A-2 231 136, les joues sont réalisées indépendamment du fût et s'emboîtent sur les extrémités du fût. Chaque joue est elle-même constituée par un flasque et un demi-moyeu. Le demi-moyeu présente une portée cylindrique, qui s'emboîte dans l'alésage du fût, et un voile périphérique, qui s'encastre dans une cuvette prévue à son effet sur la face extérieure du flasque considéré sur le fût. Le flasque est maintenu en place en bout du fût par le demi-moyeu. Un trou dans le voile est prévu à proximité de la portée pour le passage du brin intérieur du conducteur enroulé sur le fût.

Selon le document US-A-4657 203, la bobine est en une seule pièce, les joues étant simplement saillantes sur la périphérie du tambour à ses extrémités. Ce tambour a un axe à partir duquel s'étendent radialement des nervures axiales qui relient l'axe au tambour, de préférence sur la longueur du tambour. Les nervures présentent une encoche ouverte radialement sur leur bord, à l'une des extrémités du tambour. Ce tambour a quant à lui une ouverture à cette extrémité pour le passage du brin interne du conducteur enroulé sur le tambour, ce brin interne étant laissé en surlongueur. Cette surlongueur est stockée dans les encoches dans le bord des différentes nervures. Un couvercle rapporté contre ces nervures ferme les encoches et protège la surlongueur du brin interne stockée.

Selon le document US-A 3 584 819, la bobine comporte deux joues réalisées indépendamment du fût et emboîtées sur les extrémités du fût. Chaque joue est massive et présente sur l'une de ses faces, dite face intérieure, une partie centrale pleine qui est saillante sur la partie périphérique de cette face et définit un épaulement d'emboîtage dans l'extrémité du fût et un trou axial réalisé dans la partie épaulée de plus grande épaisseur. La surface intérieure du fût est légèrement chanfreinée, depuis sa partie médiane. Les épaulements des joues sont adaptés aux extrémités du fût, et y sont retenus par friction et/ou par collage.

Les bobines connues par le premier et le troisième de ces documents ont l'avantage de pouvoir être expédiées et stockées avant utilisation sous encombrement réduit. Celles selon le premier document sont par contre de réalisation relativement complexe, avec leurs trois différents types de pièces assemblées. Celles selon le troisième document sont quant à elles relativement lourdes. Les bobines selon l'un ou l'autre de ces deux documents ne sont pas totalement satisfaisantes pour le conditionnement de fibres optiques qui arrivent à se coincer entre le fût et les joues et présentent leur brin interne d'enroulement non protégé.

Les bobines connues par le deuxième de ces documents permettent quant à elles un conditionnement satisfaisant de fibres optiques. En revanche, elles ne permettent pas l'expédition et le stockage sous un encombrement réduit avant leur utilisation. Leur réalisation reste en outre également relativement complexe et par là de coût élevé.

La présente invention a pour but l'obtention de bobines présentant les avantages des trois types de bobines précitées, mais ne présentant pas leurs inconvénients.

Elle a pour objet une bobine de conditionnement de conducteur, comportant un fût tubulaire et deux joues latérales identiques assemblées sur ledit fût, dans laquelle chaque joue est réalisée d'une seule pièce et présente des moyens d'emboîtage saillants sur l'une de ses faces, dite intérieure, d'emboîtage de la joue dans l'alésage du fût, et ledit fût présente des chanfreins dits intérieurs sur sa face intérieure, caractérisée en ce que lesdits chanfreins intérieurs s'étendent sur les seules extrémités du fût et sont d'angle limité, ayant une valeur sensiblement de 1 à 2 degrés, et en ce que lesdits moyens d'emboîtage sont constitués par une première portée cylindrique de diamètre extérieur sensiblement égal à la valeur moyenne du diamètre intérieur de chacune des extrémités chanfreinées dudit fût.

Ladite bobine présente en outre l'une ou l'autre des caractéristiques suivantes :
- chaque joue comporte une deuxième portée cylindrique intérieure et coaxiale à ladite première portée et saillante sur ladite face intérieure, un jeu d'ailettes axiales régulièrement réparties reliant lesdites première et deuxième portées, et un voile sur la périphérie de ladite première portée, ledit voile étant plan sur la face intérieure de la joue, à l'exception de sa jonction avec la première portée qui forme une butée circulaire d'épaulement de largeur correspondant à l'épaisseur dudit fût,
- chaque joue comporte, en outre sur sa face extérieure :
   . une couronne dentée s'étendant dans le plan des arêtes extérieures desdites ailettes la reliant à ladite deuxième portée, cette couronne dentée étant à dents, régulièrement réparties sur sa périphérie et alternées avec des encoches, définissant une première paroi latérale discontinue d'un logement de réserve sur la joue,
   . un épaulement circulaire continu sur ladite couronne dentée au niveau du fond desdites encoches, tronquant par un épaulement correspondant la partie terminale des arêtes extérieures desdites ailettes du côté de ladite première portée et constituant le fond dudit logement de réserve,
   . un jeu de pattes radiales sur la partie terminale tronquée des arêtes extérieures desdites ailettes, constituant une deuxième paroi latérale discontinue dudit logement de réserve,
   . et un trou dans ledit voile de la joue faisant communiquer ledit logement de réserve et la périphérie du fût,
- deux nervures circulaires délimitent ledit voile sur la face extérieure de la joue et des nervures radiales régulièrement réparties entre lesdites nervures circulaires divisent le voile en caissons trapézoïdaux, l'un de ces caissons étant rendu double des autres par suppression d'une nervure radiale et affectée à l'identification de la bobine.

Les caractéristiques et les avantages de la présente invention apparaîtront clairement dans la description qui suit donnée d'un exemple préféré de réalisation illustré dans les dessins ci-annexés. Dans ces dessins :
- la figure 1 est une vue en élévation d'une bobine selon la présente invention,
- la figure 2 est une vue de face de cette bobine,
- la figure 3 est une vue en coupe partielle à échelle agrandie de la bobine selon les figures 1 et 2, faite selon les lignes III-III de la figure 2,
- la figure 4 est une vue en coupe partielle à échelle agrandie par rapport aux figures 1 et 2 et à la figure 3 d'un détail de la bobine, faite selon la ligne IV-IV de la figure 2.

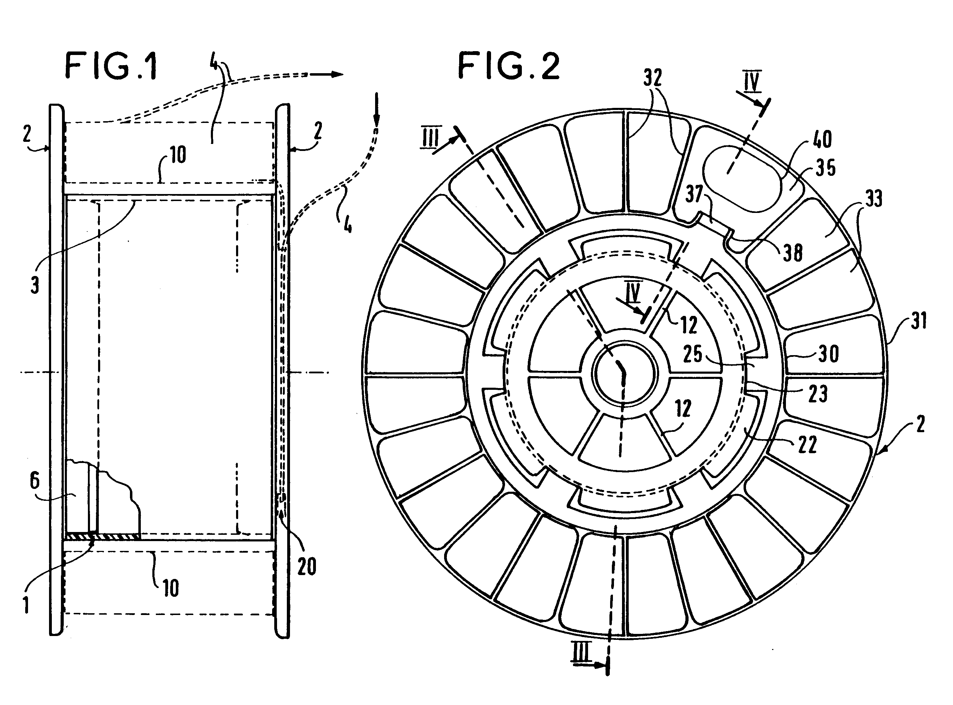

La bobine illustrée dans les figures 1 à 3 comporte trois pièces, à savoir un fût tubulaire 1 et deux joues identiques 2. Les joues 2 s'emboîtent dans l'alésage 3 du fût, à l'une et l'autre de ses deux extrémités et sont fixées au fût. Le fût recevant ces deux joues est de longueur choisie en fonction de la capacité voulue de stockage de conducteur 4 enroulé sur le fût entre les deux joues.

La bobine résultante est particulièrement adaptée au stockage d'une grande longueur de fibre optique. Ses trois pièces sont réalisées séparément les unes des autres. Elles sont en matériau compatible avec le produit à enrouler sur la bobine et permettant un bon assemblage. Elles sont de préférence en matière thermoplastique, en particulier en acrylite-butadiène-styrène, en polystyrène, ou en polypropylène. Elles sont assemblées par tout procédé convenable, en particulier par collage ou soudage aux ultra-sons.

Le fût 1 est constitué par un simple tronçon de tube ; sa longueur est indépendante des particularités des joues, mais son diamètre est adapté aux particularités de ces joues. Il présente un chanfrein intérieur 5, d'angle b limité, de un ou quelques degrés et de préférence de 1 ou 2 degrés seulement, à l'une et l'autre de ses extrémités. La longueur de ce chanfrein est notée h ; elle est montrée légèrement supérieure à celle de la portée 6. Le fût est de préférence revêtu extérieurement d'une couche de mousse 10, d'épaisseur uniforme. Cette couche de mousse est légèrement saillante sur l'une et l'autre des extrémités du fût 1.

Chacune des deux joues 2 est obtenue par moulage et constitue un moyeu-flasque. Chacune d'elles présente, sur l'une de ses faces dite intérieure pour son assemblage sur le fût, une première portée cylindrique 6, s'emboîtant rigoureusement dans l'alésage 3 du fût, et une deuxième portée cylindrique 7 coaxiale et intérieure à la première et définissant l'axe de la bobine.

La portée cylindrique 6 présente un chanfrein extérieur 8 sur sa seule partie terminale. Ce chanfrein 8 est d'angle c supérieur à celui b du chanfrein 5. L'angle c est d'une dizaine de degrés, il est choisi par exemple de 15 degrés. Sa longueur est notée d, elle est environ égale au tiers de la longueur totale de la portée 6 laissée par ailleurs parfaitement cylindrique.

La portée intérieure 7 est quant à elle de surface extérieure cylindrique sur toute sa longueur. Outre l'axe de la bobine défini par son alésage, elle peut recevoir un tube entretoise 11, comme montré en pointillés, qui est emboîté et fixé sur elle, pour un renfort de la bobine résultante et une garantie d'entraxes sans jeu entre les joues.

Les deux portées 6 et 7 sont sensiblement de même longueur. Elles sont reliées l'une à l'autre par un jeu d'ailettes axiales 12 régulièrement réparties, qui s'étendent radialement sur la face intérieure de la joue entre les deux portées. Ces ailettes sont montrées au nombre de six dans l'exemple illustré, mais leur nombre peut être différent. Elles permettent une maîtrise des tensions internes et minimisent le voilage des joues. Ces ailettes ont leur arête intérieure en biais, avec l'une des extrémités de ces arêtes pratiquement en bout de la portée 6 et l'autre sensiblement à mi-longueur de la portée intérieure 7 et formant à la jonction sur cette portée 7 un méplat 12A d'appui du tube 11.

La périphérie de la joue, autour de la portée 6, forme un voile plein 14. La face interne du voile est plane, à l'exception de sa jonction avec la portée 6 où elle présente un épaulement 15. Cet épaulement est de largeur quasi égale à l'épaisseur du fût 1, qui par le chanfrein limité intérieur 5 se plaque rigoureusement en butée sur cet épaulement en évitant la moindre gorge entre le fût et la joue. Sa hauteur est de préférence égale ou très légèrement inférieure à la longueur de la partie terminale de la couche de mousse 10 débordant sur le fût pour un bon appui de cette couche de mousse sur la joue et plus précisément sur le voile 14, à la périphérie de l'épaulement 15.

Chaque joue présente sur sa face extérieure un logement de réserve 20 obtenu directement de moulage, affecté au stockage d'une certaine longueur de conducteur, en particulier de fibre, et à la protection simultanée de la longueur stockée. Ce logement de réserve 20 est défini par une couronne 21 dentée sur sa périphérie, à dents 22 alternées avec des encoches 23 et régulièrement réparties. Ces dents 22 sont dans cet exemple au nombre de six. Elles sont entre les ailettes 12, alors que les encoches 23 sont centrées sur les différentes ailettes.

La couronne 21 et ses dents périphériques 22 sont dans le même plan que les arêtes extérieures des ailettes 12 qui les relient à l'extrémité épaulée 7A de la portée interne 7 sur cette face extérieure. Les dents 22 forment des retenues latérales extérieures limitant le logement de réserve. Leur hauteur est définie et choisie en fonction de la capacité souhaitée du logement de réserve 20.

Le fond du logement 20 est continu et défini par un épaulement circulaire 24 sur la couronne 21 au niveau du fond des encoches 23. Cet épaulement 24 correspond à un épaulement sur les arêtes extérieures des ailettes 12. L'autre paroi latérale de ce logement est ajourée ; elle est définie par un jeu de pattes 25 intérieures par rapport aux dents 22 et en regard des encoches 23 entre ces dents.

Ces pattes 25 sont sur la partie terminale tronquée des arêtes extérieures des ailettes, entre leur épaulement et la surface interne de la portée 6. Une couronne continue 26 relie ces pattes individuelles 25 et la surface interne de la portée 6, pour une rigidité d'ensemble satisfaisante.

Sur la face extérieure de la joue, le voile 14 est en creux et limité par une nervure circulaire 30, prolongeant sensiblement la portée 6, et une nervure circulaire périphérique 31. Il présente en outre un jeu de nervures radiales 32 uniformément réparties, qui s'étendent entre ces deux nervures circulaires 30 et 31.

Les nervures radiales 32 définissent entre elles des caissons trapézoïdaux harmonieux 33 et assurent la rigidité et la tenue mécanique d'ensemble. Elles sont à pas angulaire sous multiple de celui des ailettes 12. Ces nervures 30, 31 et 33 ont leur sommet dans le plan de la couronne dentée 21 pour une planéité de la face extérieure, malgré tous les aménagements qui y sont prévus.

L'une des nervures radiales 33 précitées est avantageusement supprimée. Il lui correspond un caisson trapézoïdal noté 35 double des autres caissons 33. Ce caisson 35 est choisi centré sur l'une des ailettes 12 et l'une des pattes 25. La joue 2 présente un trou 37 dans ce caisson 35, débouchant sensiblement sur la périphérie de l'épaulement 15 sur la face interne du voile 14. Ce trou 37 est limité latéralement par deux nervures arquées 38 prolongeant sur la hauteur du trou 37 la nervure 30 interrompue à son niveau, en définissant une transition arquée de guidage du conducteur et en particulier de la fibre optique, entre le logement de réserve 20 et le fût 1. Cette transition arquée évite de provoquer toute possible amorce de rupture du conducteur ou de la fibre optique ou tout autre endommagement. Le bord 37A de ce trou, au niveau de l'interruption de la nervure circulaire 30, est lui-même arrondi dans ce même but.

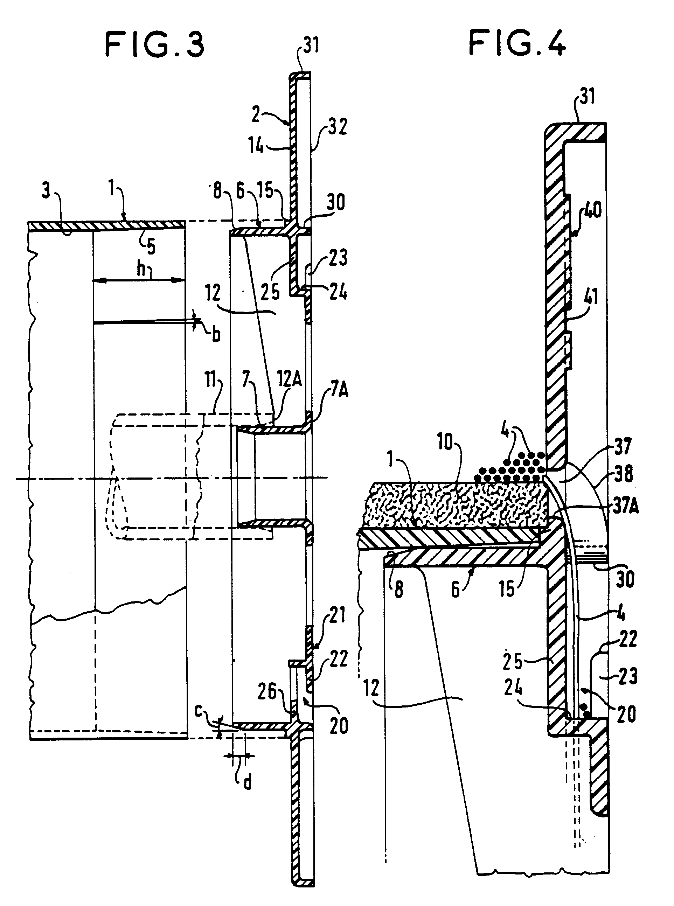

En regard des figures 2 et 4 en particulier, on voit que ce même caisson double 35 présente en outre une zone 40 centrée dans le caisson et en légère surépaisseur. Cette zone 40 compense au moins en partie le léger déséquilibre de masse résultant de la nervure radiale supprimée. Elle est par ailleurs affectée à l'identification ou la personnalisation de la bobine et porte des empreintes 41 gravées en creux directement obtenues de moulage. Ces empreintes gravées sont modulables et convertibles à la demande. Bien entendu tout autre mode d'identification peut être adopté.

La bobine résultante est robuste, légère et très économique. Elle est expédiable sous encombrement réduit. Son assemblage est des plus simples, les chanfreins garantissant le parallélisme des joues. Les dispositions rayonnées intérieures et extérieures garantissent une bonne tenue mécanique, pour une grande capacité de stockage sur le fût sans provoquer d'évasement des joues, ces joues restant pour autant suffisamment souples pour absorber l'impact de chocs au cours des manipulations de la bobine et jouant ainsi le rôle d'amortisseur par rapport à leur partie centrale qui forme la véritable ossature.

Les logements de réserve 20 sur l'une et l'autre des joues assurent la totale symétrie de la bobine. Ils n'apportent aucune plus-value sensible de fabrication. Ces deux logements 20, ainsi que la zone d'identification, sur l'une et l'autre des joues évitent tout balourd de la bobine. Par ailleurs ces deux logements permettent le stockage de deux conducteurs sur le fût, avec pour chacun de ces conducteurs une surlongueur laissée sur le brin intérieur et stockée séparemment dans l'un ou l'autre de ces logements. Le stockage de cette surlongueur est aisé à assurer. En outre il est directement protégé.

La discontinuité des parois latérales de chaque logement de réserve et les épaisseurs des ailettes rigides et autres parties des joues ont en outre étudiées et optimisées pour des notions de coût, de tenue et d'esthétique.

La présente invention a été décrite en regard de l'exemple préféré de réalisation illustré dans les dessins. Il est bien évident que l'on peut lui apporter des modifications de détail ou remplacer certains moyens par d'autres équivalents, sans pour autant sortir du cadre de cette invention.

## Revendications

1. Bobine de conditionnement de conducteur, comportant un fût (1) tubulaire et deux joues (2) latérales identiques assemblées sur ledit fût (1), dans laquelle chacune des joues (2) est réalisée d'une seule pièce et présente des moyens d'emboîtage saillants sur l'une de ses faces, dite intérieure, s'emboîtant dans l'alésage du fût, et ledit fût présente des chanfreins dits intérieurs (5) sur sa propre face intérieure, caractérisée en ce que lesdits chanfreins intérieurs (5) s'étendent sur les seules parties terminales du fût (1) et sont chacun d'angle limité (b), ayant une valeur sensiblement de 1 à 2 degrés, et en ce que lesdits moyens d'emboîtage sont constitués par une première portée cylindrique (6) de diamètre extérieur sensiblement égal à la valeur moyenne du diamètre intérieur de chacune des extrémités chanfreinées dudit fût.

2. Bobine selon la revendication 1, caractérisée en ce que lesdits chanfreins intérieurs (5) dudit fût (1) sont chacun de longueur (h) sensiblement égale à celle de ladite première portée (6) et en ce que ladite première portée (6) présente un chanfrein extérieur (8), prévu sur sa seule partie terminale et d'angle (c) supérieur à l'angle limité (b) de chacun des chanfreins intérieurs (5) dudit fût.

3. Bobine selon la revendication 2, caractérisée en ce que chaque joue (2) comporte une deuxième portée cylindrique (7), intérieure et coaxiale à ladite première portée et saillante sur ladite face intérieure de la joue, et un jeu d'ailettes axiales (12) régulièrement réparties reliant lesdites premières et deuxièmes portées.

4. Bobine selon la revendication 3, caractérisée en ce que chaque joue (2) présente un voile (14) sur la périphérie de ladite première portée (6), ledit voile étant plan sur la face intérieure de la joue, à l'exception de sa jonction avec la première portée qui forme une butée circulaire intérieure d'épaulement (15) de largeur correspondant à l'épaisseur dudit fût (1).

5. Bobine selon l'une des revendications 3 et 4, caractérisée en ce que lesdites ailettes axiales (12) ont leurs arêtes sur la face intérieure de la joue, dites arêtes intérieures, s'étendant en biais entre les portées cylindriques (6, 7) et présentant un méplat terminal (12A) à leur jonction sur ladite deuxième portée.

6. Bobine selon l'une des revendications 3 à 5, caractérisée en ce que chaque joue (2) présente, sur sa face extérieure :
- une couronne dentée (21) s'étendant dans le plan des arêtes extérieures desdites ailettes (12) le reliant à ladite deuxième portée (7), ladite couronne dentée étant à dents (22), régulièrement réparties sur sa périphérie et alternées avec des encoches (23), définissant une première paroi latérale discontinue d'un logement de réserve (20) sur la joue,
- un épaulement circulaire continu (24) sur ladite couronne dentée au niveau du fond desdites encoches, tronquant par un épaulement correspondant la partie terminale des arêtes extérieures desdites ailettes du côté de ladite première portée et constituant le fond dudit logement de réserve (20),
- un jeu de pattes radiales (25) sur la partie terminale tronquée des arêtes extérieures desdites ailettes, constituant une deuxième paroi latérale discontinue dudit logement de réserve,
- et un trou (37) dans ledit voile (14) de la joue (2) faisant communiquer ledit logement de réserve et la périphérie du fût.

7. Bobine selon la revendication 6, caractérisée en ce que ledit voile (14) présente sur la face extérieure de la joue (2) deux nervures circulaires, l'une dite interne (30) et l'autre dite périphérique (31) le délimitant, et une pluralité de nervures radiales (32) uniformément réparties et reliant les deux nervures circulaires (30, 31) en définissant des caissons (33) sensiblement trapézoïdaux entre elles, lesdites nervures circulaires et radiales ayant leur sommet dans le plan de ladite couronne dentée (21).

8. Bobine selon la revendication 7, caractérisée en ce que ledit trou (37) dans le voile est limité latéralement par deux nervures arquées (38) prolongeant les extrémités de ladite nervure circulaire interne (30) interrompue le long dudit trou.

9. Bobine selon l'une des revendications 7 et 8, caractérisée en ce que lesdites nervures radiales (32) sont à pas angulaire sous-multiple du pas entre lesdites ailettes et en ce que l'une desdites nervures radiales est absente et définit en correspondance un caisson trapézoïdal double (35) présentant une zone d'identification (40) en surépaisseur sur la face extérieure de la joue.

10. Bobine selon la revendication 9, caractérisée en ce que ladite zone d'identification (40) porte des empreintes gravées en creux (41).

11. Bobine selon l'une des revendications 9 et 10, caractérisée en ce que ledit trou (37) est formé dans ledit caisson double (35) et est centré en regard de l'une des pattes (25) appartenant à la deuxième paroi latérale du logement de réserve (20).

## Claims

1. A reel for packaging a conductor, said reel comprising a tubular core (1) and two identical end plates (2) assembled onto said core (1), in which reel each end plate (2) is made in one piece and has projecting fitting means on an "inside" one of its faces, fitting into the bore of the core, and said core has "inside" bevelled surfaces (5) on its own inside face, said reel being characterized in that said inside bevelled surfaces (5) extend over the end portions only of the core (1) and are of limited angle (b) lying in the range substantially one degree to two degrees, and in that said fitting means are constituted by a first cylindrical support (6) of outside diameter substantially equal to the mean value of the inside diameter of each of the bevelled ends of said core.

2. A reel according to claim 1, characterized in that said inside bevelled surfaces (5) of said core (1) are each of length (h) substantially equal to the length of said first support (6), and in that said first support (6) has an outside bevelled surface (8) provided on its end portion only, and of angle (c) greater than the limited angle (b) of each of the inside bevelled surfaces (5) of said core.

3. A reel according to claim 2, characterized in that each end plate (2) includes a second cylindrical support (7) inside and coaxial to said first support and projecting from said inside face of the end plate, and a set of uniformly-distributed axial fins (12) connecting said first support to said second support.

4. A reel according to claim 3, characterized in that each end plate (2) has a flange (14) at the periphery of said first support (6), said flange being plane on the The inside face of the end plate, except where it meets the first support and forms an inside circular abutment shoulder (15) of width corresponding to the thickness of said core (1).

5. A reel according to claim 3 or 4, characterized in that, on the inside face of the end plate, said axial fins (12) have their "inside" edges sloping between the supports (6, 7) and each having an end flat (7A) where they meet said second support.

6. A reel according to any one of claims 3 to 5, characterized in that, on its outside face, each end plate (2) has:
a toothed ring (21) extending in the plane of the outside edges of said fins (12) which connect said ring to said second support (7), said toothed ring having teeth (22) distributed uniformly around its periphery and disposed alternately with notches (23), and delimiting a first discontinuous end wall of a reserve housing (20) in the end plate;
a continuous circular shoulder (24) on said toothed ring at the bottom of said notches, which circular shoulder constitutes the bottom of said reserve housing (20) and truncates the end portion of the outside edge of each of said fins via a corresponding shoulder at the first support end of the fin;
a set of radial tabs (25) on the truncated end portion of the outside edge of each of said fins, which set constitutes a second discontinuous end wall of said reserve housing; and
a hole (37) in said flange (14) of the end plate (2) making said reserve housing communicate with the periphery of the core.

7. A reel according to claim 6, characterized in that, on the outside face of the end plate (2), said flange (14) has two circular ribs, one of which is referred to as an "inner" rib (30) and the other is referred to as a "peripheral" rib (31), which circular ribs delimit said flange, and a plurality of uniformly-distributed radial ribs (32) interconnecting the two circular ribs (30, 31) and delimiting substantially trapezium-shaped boxes (33) between one another, the tops of said circular ribs and of said radial ribs being situated in the plane of said toothed ring (21).

8. A reel according to claim 7, characterized in that said hole (37) in the flange is delimited on either side by two curved ribs (38) extending the ends of said inner circular rib (30) which is interrupted over the said hole.

9. A reel according to claim 7 or 8, characterized in that said radial ribs (32) are disposed at an angular pitch that is a sub-multiple of the pitch between said fins, and in that one of said radial ribs is missing, thereby delimiting a corresponding double trapezium-shaped box (35) having an identification region (40) standing proud from the outside face of the end plate.

10. A reel according to claim 9, characterized in that said identification region (40) bears recessed etched indents (41).

11. A reel according to claim 9 or 10, characterized in that said hole (37) is formed in said double box (35) and is centered facing one of the tabs (25) belonging to the second end wall of the reserve housing (20).

## Patentansprüche

1. Spule zum Lagern eines Leiters, mit einem rohrförmigen Wickelkörper (1) und zwei identischen Seitenwangen (2), die auf den Wickelkörper (1) aufgesetzt sind, wobei jede Wange (2) in einem Stück ist und auf ihrer Innenseite vorspringende Einfügungsmittel aufweist, um die Wange in die Bohrung des Wickelkörpers einsetzen zu können und wobei der Wickelkörper Abschrägungen (5) auf seiner Innenseite aufweist, dadurch gekennzeichnet, daß die inneren Abschrägungen (5) sich nur über die Endbereiche des Wickelkörpers (1) erstrecken und einen begrenzten Winkel (b) aufweisen, dessen Wert im wesentlichen zwischen 1 und 2 Grad liegt, und daß die Einfügungsmittel aus einem ersten zylindrischen Lagerstutzen (6) bestehen, dessen Außendurchmesser im wesentlichen gleich dem mittleren Wert des Innendurchmessers jedes der abgeschrägten Enden des Wickelkörpers ist.

2. Spule nach Anspruch 1, dadurch gekennzeichnet, daß die inneren Abschrägungen (5) des Wickelkörpers (1) je eine Länge (h) gleich im wesentlichen der des ersten Lagerstutzens (6) besitzen und daß der erste Lagerstutzen (6) eine äußere Abschrägung (8) aufweist, die nur in seinem Endbereich vorgesehen ist und einen Winkel (c) aufweist, der größer ist als der begrenzte Winkel (b) jeder der inneren Abschrägungen (5) des Wickelkörpers.

3. Spule nach Anspruch 2, dadurch gekennzeichnet, daß jede Wange (2) einen zweiten zylindrischen Lagerstutzen (7), der innerhalb der und koaxial zum ersten Lagerstutzen an der Innenseite der Wange vorstehend angeordnet ist, und einen Satz axialer Speichen (12) aufweist, die regelmäßig verteilt sind und den ersten und den zweiten Lagerstutzen verbinden.

4. Spule nach Anspruch 3, dadurch gekennzeichnet, daß jede Wange (2) eine Wand (14) außerhalb des ersten Lagerstutzens (6) aufweist, wobei diese Wand auf der Innenseite der Wange eben ist, mit Ausnahme ihres Übergangs zum ersten Lagerstutzen, der einen kreisförmigen inneren Schulteranschlag (15) einer Breite bildet, die der Dicke des Wickelkörpers (1) entspricht.

5. Spule nach einem der Ansprüche 3 und 4, dadurch gekennzeichnet, daß die Kanten der axialen Speichen (12) auf der Innenseite der Wange, innere Kanten genannt, sich schräg zwischen den zylindrischen Lagerstutzen (6, 7) erstrecken und eine Endabflachung (12A) an ihrem Übergang zum zweiten Lagerstutzen aufweisen.

6. Spule nach einem der Ansprüche 3 bis 5, dadurch gekennzeichnet, daß jede Wange (2) auf ihrer Außenseite aufweist:
- einen Zahnkranz (21), der sich in der Ebene der Außenkanten der Speichen (12) erstreckt, die sie mit dem zweiten Lagerstutzen (7) verbinden, wobei der Zahnkranz Zähne (22) aufweist, die regelmäßig auf seiner Peripherie verteilt sind und mit Kerben (23) abwechseln und eine erste unterbrochene Seitenwand eines Reserveraums (210) auf der Wange definieren,
- eine durchgehende kreisförmige Schulter (24) auf dem Zahnkranz in Höhe des Bodens der Kerben, die durch eine entsprechende Schulter den Endbereich der Außenkanten der Speichen auf der Seite des ersten Lagerstutzens verkürzt und den Boden des Reserveraums (20) bildet,
- einen Satz von radialen Laschen (25) auf dem verkürzten Endbereich der Außenkanten dieser Speichen, die eine zweite durchbrochene Seitenwand des Reserveraums bilden,
- und ein Loch (37) in der Wand (14) der Wange (2), das den Reserveraum und den Umfang des Wickelkörpers miteinander verbindet.

7. Spule nach Anspruch 6, dadurch gekennzeichnet, daß die Wand (14) auf der Außenseite der Wange (2) zwei kreisförmige Rippen, nämlich eine innere Rippe (30) und eine äußere Rippe (31) und eine Vielzahl von radialen Rippen (32) aufweist, die gleichmäßig verteilt sind und die beiden kreisförmigen Rippen (30, 31) miteinander verbinden, indem sie im wesentlichen trapezförmige Kästen (33) definieren, wobei die kreisförmigen und radialen Rippen mit ihrer Spitze in der Ebene des Zahnkranzes (21) liegen.

8. Spule nach Anspruch 7, dadurch gekennzeichnet, daß das Loch (37) in der Wand seitlich von zwei gekrümmten Rippen (38) begrenzt wird, die die Enden der inneren kreisförmigen Rippe (30) fortsetzen, die entlang des Lochs unterbrochen ist.

9. Spule nach einem der Ansprüche 7 und 8, dadurch gekennzeichnet, daß die radialen Rippen (32) einen Teilungswinkel haben, der ein Untervielfaches des Teilungswinkels zwischen den Speichen ist, und daß eine der radialen Rippen weggelassen wurde und entsprechend einen doppelten trapezförmigen Kasten (35) definiert, der einen Identifizierungsbereich (40) in Überdicke auf der Außenseite der Wange aufweist.

10. Spule nach Anspruch 9, dadurch gekennzeichnet, daß der Identifizierungsbereich (40) hohl eingravierte Markierungen (41) aufweist.

11. Spule nach einem der Ansprüche 9 und 10, dadurch gekennzeichnet, daß das Loch (37) im doppelten Kasten (35) ausgeführt und gegenüber einer der Laschen (25) zentriert ist, die zu der zweiten Seitenwand des Reserveraums (20) gehört.
